Europäisches Patentamt

(19) European Patent Office

Office européen des brevets

(11) Numéro de publication : **0 296 898 B1**

## (12) FASCICULE DE BREVET EUROPEEN

(45) Date de publication du fascicule du brevet :
28.08.91 Bulletin 91/35

(21) Numéro de dépôt : **88401185.9**

(22) Date de dépôt : **17.05.88**

(51) Int. Cl.⁵ : **B62M 3/08**

(54) Dispositif de fixation d'une chaussure sur une pédale de bicyclette.

(30) Priorité : **22.06.87 FR 8708730**

(43) Date de publication de la demande :
**28.12.88 Bulletin 88/52**

(45) Mention de la délivrance du brevet :
**28.08.91 Bulletin 91/35**

(84) Etats contractants désignés :
**AT BE CH DE FR IT LI LU NL**

(56) Documents cités :
**EP-A- 0 146 454**
**FR-A- 2 588 235**
**US-A- 4 030 774**

(73) Titulaire : **STE LOOK**
**Rue de la Pique, B.P. No. 72**
**F-58004 Nevers Cédex (FR)**

(72) Inventeur : **Bidal, René Marcel Robert**
**Le Moulin**
**F-01450 Labalme sur Cerdon (FR)**

(74) Mandataire : **Tony-Durand, Serge**
**Cabinet Tony-Durand 77, rue Boissière**
**F-75116 Paris (FR)**

## Description

La présente invention concerne un dispositif de fixation d'une chaussure sur une pédale de bicyclette.

On utilise couramment, pour maintenir fermement la chaussure d'un cycliste sur la pédale d'une bicyclette, des cale-pieds qui permettent d'exercer non seulement des efforts de poussée vers le bas mais également des efforts de traction vers le haut. L'emploi de tels cale-pieds, s'il permet de rendre parfaitement solidaire le cycliste et son engin, introduit par là-même un risque important pour le cycliste en cas de chute lors de la pratique de la bicyclette. Pour remédier à cet inconvénient on a recherché d'autres dispositifs de fixation d'une chaussure sur une pédale de bicyclette visant essentiellement à améliorer la liaison entre la chaussure et la pédale, tout en permettant un dégagement aisé de la chaussure en cas de chute.

Parmi ces dispositifs on connaît celui qui est décrit dans le brevet EP 163.615. Ce dispositif permet d'obtenir une bonne liaison avec une chaussure, mais il présente un certain nombre d'inconvénients. En premier lieu ce dispositif ne résoud pas réellement le problème essentiel d'une possibilité de libération aisée de la chaussure en cas de chute. En effet la fixation de la chaussure sur la pédale nécessite la manoeuvre manuelle d'un organe d'enclenchement et il en est de même pour la libération de la chaussure pour laquelle il faut manoeuvrer à la main le même organe de commande, mais en sens inverse. Ceci exclut donc toute possibilité de dégagement aisé en cas de chute.

Par contre les brevets EP 146.454 et FR 2556687 décrivent un dispositif selon la première partie de la revendication 1 qui est spécialement conçu pour permettre une fixation et une libération faciles de la chaussure par rapport à la pédale. Ce dispositif comprend une platine rapportée sous la chaussure et qui forme, à l'avant et à l'arrière deux éléments d'accrochage comportant respectivement une encoche ouverte vers l'avant et une encoche ouverte vers l'arrière. L'élément d'accrochage, prévu à l'avant, consiste en un bec destiné à être engagé sous une griffe fixe constituant un organe d'ancrage situé à l'avant de la pédale. Quant à l'encoche prévue à l'arrière de la platine portée par la chaussure, elle est destinée à recevoir une griffe pivotante constituant un organe d'accrochage situé à l'arrière de la pédale. Cette griffe pivotante est maintenue en position d'accrochage par un ressort et pour que se produise la libération de la chaussure, il suffit d'un mouvement de rotation de celle-ci sur elle-même, soit volontaire soit automatique en cas de risque de torsion du fait d'une chute.

Ce dispositif résoud donc bien le problème posé. Cependant il est coûteux, lourd et encombrant. De plus les possibilités de déblocage de la chaussure sont restreintes puisque la libération de la chaussure, une fois enclenchée, ne peut s'effectuer que par rotation du pied vers l'extérieur. Par ailleurs l'engagement de la chaussure dans la pédale exige que le cycliste regarde la pédale pour pouvoir la chausser, du fait que l'engagement de la chaussure s'effectue en premier par le bout du pied. Enfin la semelle de la chaussure doit porter une platine de grande largeur dont la présence est gênante.

La présente invention vise à remédier à ces inconvénients du dispositif selon le EP 146.454 et Fr 2556687 en procurant un dispositif de fixation particulièrement simple, léger, aérodynamique, facile à fabriquer et qui permet un accrochage très aisé de la chaussure.

A cet effet l'invention a pour objet un dispositif de fixation d'une chaussure sur une pédale de bicyclette, comprenant sous la semelle de la chaussure, au moins un élément d'accrochage fixé à cette semelle et présentant une encoche d'accrochage postérieure ouverte vers l'arrière et un creux d'accrochage antérieur, ouvert vers l'avant, et, sur la pédale, des organes d'ancrage postérieur et antérieur, lesquels sont adaptés à être engagés respectivement à l'intérieur de l'encoche d'accrochage postérieure et à l'intérieur du creux d'accrochage antérieur des éléments d'accrochage rapportés sous la chaussure, caractérisé en ce que :

— ces deux organes d'ancrage sont constitués par deux tronçons de fil métallique élastique cambré, et ils comportent des éléments d'ancrage postérieur et antérieur situés à une distance longitudinale l'un de l'autre légèrement inférieure ou égale à la distance entre l'encoche postérieure et le creux antérieur de l'élément d'accrochage fixé à la chaussure, de manière à pouvoir venir se loger et se verrouiller respectivement dans l'encoche postérieure et le creux antérieur pour assurer la fixation de la chaussure sur la pédale,

— le fil métallique formant l'organe d'ancrage postérieur comprend deux branches horizontales se rejoignant pour former un angle obtus ouvert vers l'avant, de substantiellement 120° à 130°,

— le fil métallique formant l'organe d'ancrage antérieur comprend une branche horizontale transversale présentant deux bossages s'étendant vers l'arrière, en formant entre eux une légère encoche située dans la partie centrale de cette branche,

— laquelle encoche est adaptée à être engagée à l'intérieur de l'encoche de l'élément avant d'accrochage rapporté sous la chaussure, cependant que le sommet de l'angle obtus de l'organe d'ancrage postérieur est engagé à l'intérieur de l'encoche de l'élément d'accrochage arrière de l'élément rapporté sous la chaussure.

On décrira ci-après, à titre d'exemples non limitatifs, diverses formes d'exécution de la présente invention, en référence au dessin annexé sur lequel :

La figure 1 est une vue en coupe verticale et longitudinale d'un dispositif de fixation d'une chaussure sur une pédale de bicyclette suivant l'invention.

La figure 2 est une vue de profil de la pédale.

La figure 3 est une vue en plan de la pédale.

La figure 4 est une vue en perspective de la pédale.

La figure 5 est une vue de dessous de la chaussure portant la barrette de liaison.

Les figures 6 et 7 sont des vues en coupe longitudinale illustrant les diverses phases de l'opération d'accrochage de la chaussure sur la pédale.

La figure 8 est une vue en coupe verticale et longitudinale d'une variante d'exécution à deux plots d'accrochage indépendants sous la semelle de la chaussure.

La figure 9 est une vue de dessous de la chaussure à deux plots d'accrochage indépendants.

La figure 10 est une vue de dessous d'une variante d'exécution de la pédale.

Le dispositif suivant l'invention est destiné à assurer la fixation d'une chaussure, représentée partiellement par sa semelle 1, sur une pédale 2 d'une bicyclette, laquelle est montée à rotation, de la manière conventionnelle, sur un pédalier, autour d'un axe horizontal et transversal 3.

Le dispositif de fixation comprend, sous la semelle 1, une barrette d'accrochage longitudinale 4 fixée à la semelle 1 par tous moyens appropriés. Cette barrette d'accrochage 4 peut être notamment encastrée, par une embase 4a, dans une rainure longitudinale formée dans la face inférieure de la semelle 1, en étant fixée au moyen de vis. Cette barrette d'accrochage 4 comporte par ailleurs une partie centrale plus épaisse 4b, s'étendant sur la plus grande partie de la longueur de l'embase 4a et qui présente une face inférieure 4c. A l'extrémité postérieure de la partie centrale 4b de la barrette 4 est formée une encoche 4d, tournée horizontalement vers l'arrière et qui est délimitée à sa partie inférieure, par un bec 4e. A son extrémité antérieure la barrette 4 présente un creux 4f tourné vers l'avant, moins profond que l'encoche 4 et qui est délimité à sa partie inférieure par un bec 4g tourné vers l'avant et qui présente une surface inférieure 4h avantageusement arrondie de haut en bas et d'avant en arrière et qui se raccorde à la face inférieure 4c.

La pédale 2 porte, de son coté, des organes d'ancrage postérieur 5 et antérieur 6 coopérant avec la barrette d'accrochage 4. Ces organes d'ancrage postérieur 5 et antérieur 6 peuvent être constitués par deux morceaux de tige à piano cambrée qui sont fixés, de préférence de manière réglable, dans le corps central 7 de la pédale avantageusement réalisé en matière plastique moulée. Ce corps central 7 comprend deux parties épaisses latérales 7a, 7b et qui sont reliées par une traverse 7c de plus petite largeur, cette traverse étant traversée par l'axe de pivotement de la pédale 2.

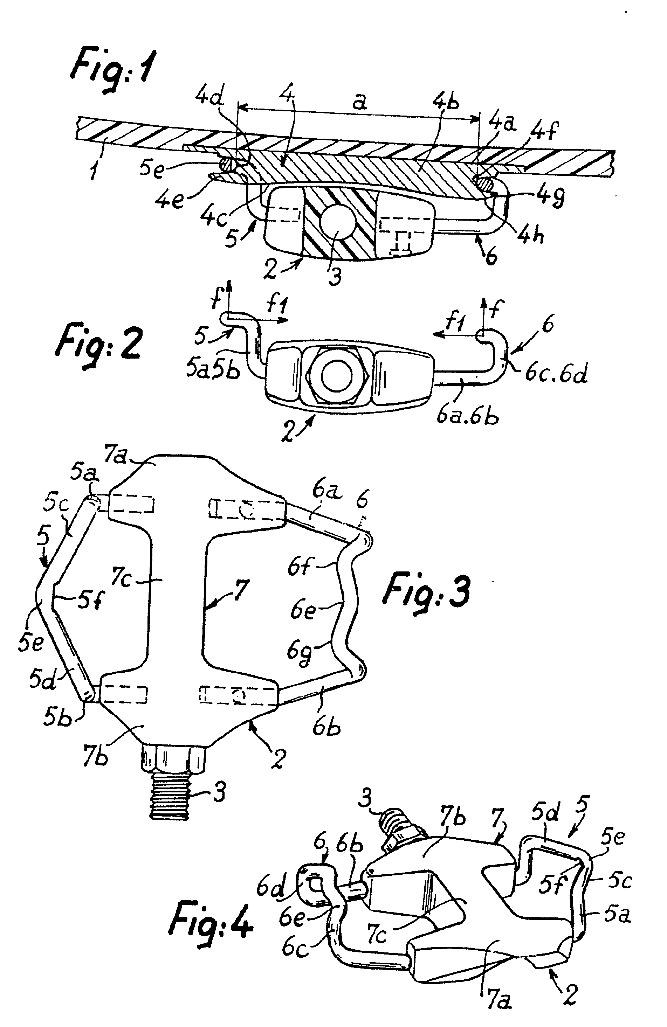

L'organe d'ancrage postérieur 5 comprend deux branches coudées 5a, 5b s'étendant verticalement à la sortie des deux parties épaisses latérales 7a, 7b du corps 7 de la pédale, lesquelles sont prolongées à leurs extrémités supérieures, par deux branches horizontales 5c, 5d se rejoignant pour former un angle obtus ouvert vers l'avant, de 120 à 130° environ. De préférence les deux branches horizontales 5c et 5d sont reliées entre elles par une courte branche transversale 5e à l'encroit du sommet de l'angle obtus. Cette courte branche centrale 5e qui peut présenter éventuellement un méplat vertical 5f sur sa face antérieure, est destinée à venir se loger dans l'encoche postérieure 4d de la barrette d'accrochage 4 en position de fixation, comme il est représenté sur la figure 1. Le méplat 5f entraîne un effet de triangulation durcissant le système au décrochage.

L'organe d'ancrage antérieur 6, également réalisé en corde à piano, comprend deux branches latérales 6a, 6b, s'étendant sensiblement horizontalement vers l'avant à partir des deux parties épaisses 7a, 7b de la pédale 7. Ces deux branches latérales 6a, 6b convergent l'une vers l'autre et elles sont prolongées vers le haut par des branches cambrées respectives 6c, 6d, sensiblement verticales. Ces branches cambrées verticales 6c, 6d sont reliées entre elles, à leurs extrémités supérieures, par une branche horizontale et transversale, en forme d'angle obtus ouvert vers l'arrière, voisin de 180°, et qui présente dans sa partie centrale une légère encoche 6e qui est ménagée dans sa partie supérieure et postérieure, cette encoche étant située entre deux épaulements 6f, 6g constitués par des bossages s'étendant vers l'arrière.

La distance $a$ entre la courte branche centrale 5e de l'organe d'ancrage postérieur 5 et l'encoche 6e de l'organe d'ancrage antérieur 6 est choisie égale ou légèrement inférieure à la distance entre le fond de l'encoche postérieure 4d et celui du creux antérieur 4f de la barrette d'accrochage, pour assurer la fixation comme il est indiqué ci-dessus.

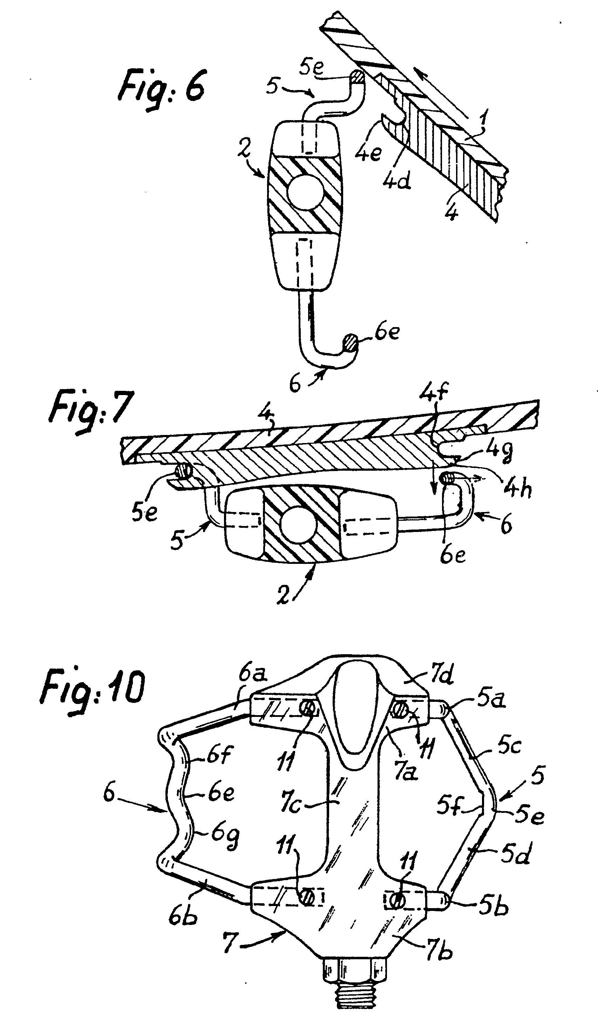

Les figures 6 et 7 illustrent la façon dont la chaussure est accrochée à la pédale 2. Normalement, lorsque la pédale 2 est libre, elle prend, du fait de son déséquilibre par rapport à son axe de pivotement 3, une position verticale dans laquelle les organes d'ancrage postérieur 5 et antérieur 6 se trouvent respectivement dans des positions supérieure et inférieure, en étant tournés vers l'avant. Pour engager sa chaussure, le cycliste place celle-ci en avant de la pédale, dans une position légèrement inclinée vers le bas comme il est représenté sur la figure 6. En déplaçant ensuite sa chaussure vers l'arrière, il provoque alors l'engagement de la courte branche centrale 5e de l'organe d'ancrage postérieur 5 dans l'encoche postérieure 4 de de la barrette d'accrochage 4. Les branches 5c, 5d de l'organe d'ancrage postérieur 5 jouent alors un rôle de guidage pour amener l'encoche postérieure 4d à l'endroit de la branche centrale 5e. Ensuite le cycliste fait pivoter à l'horizontale la pédale 2, dans le sens inverse des aiguilles d'une montre, et il lui suffit alors d'appuyer légèrement vers l'avant sur la chaussure pour assurer le verrouillage de celle-ci sur la pédale 2. En effet, comme il est représenté sur la figure 7, au cours de ce mouvement le bec antérieur 4g repousse légèrement vers l'avant, par sa rampe inférieure incurvée 4h, la partie centrale 6e de l'organe d'ancrage antérieur 6 et cette partie centrale revient ensuite élastiquement vers l'arrière, en se logeant dans le creux antérieur 4f. A partir de ce moment la chaussure est liée fermement à la pédale 2 en reposant uniquement sur les deux organes d'ancrage 5, 6, sans contact avec le corps 7 de la pédale, comme il est représenté sur la figure 1. Le creux antérieur 4f de la barrette d'accrochage 4 est alors retenu latéralement par les deux épaulements 6f, 6g. La libération de la chaussure ne peut s'effectuer que par un mouvement de pivotement de cette chaussure autour d'un axe perpendiculaire à la pédale 2. Au cours de ce mouvement l'un des épaulements 6f, 6g est repoussé vers l'avant, du fait de l'élasticité de la corde à piano constituant l'organe d'ancrage antérieur 6.

En cours de pédalage, lorsque la chaussure exerce un effort de traction vers le haut, cet effort est transmis, par l'encoche postérieure 4d et le creux antérieur 4f, respectivement à la branche centrale 5e et à l'encoche 6e, en exerçant à ces endroits des efforts vers le haut indiqués par les flèches f sur la figure 2. Ces efforts f se traduisent par des efforts horizontaux f1 dirigés l'un vers l'autre et qui tendent à rapprocher les deux organes d'ancrage 5 et 6, donc à augmenter le serrage de la chaussure sur la pédale.

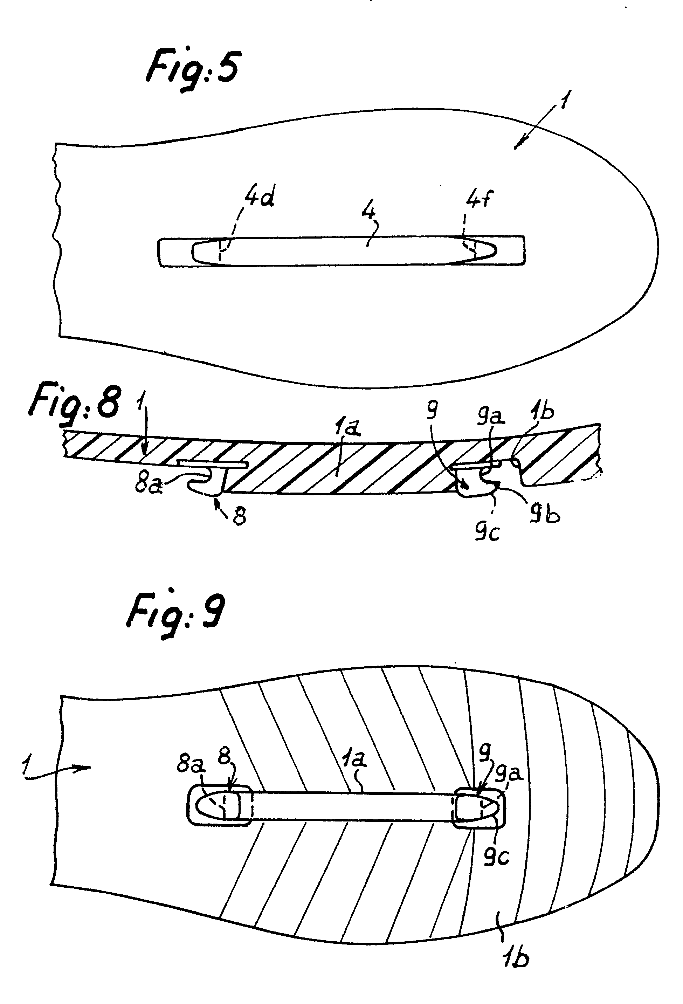

Dans la variante d'exécution de l'invention représentée sur les figures 8 et 9, la semelle de la chaussure porte, à la place d'une barrette d'accrochage longitudinale unique 4, deux plots d'accrochage distincts à savoir un plot d'accrochage postérieur 8 et un plot d'accrochage antérieur 9 lesquels sont écartés longitudinalement l'un de l'autre de la distance a entre les parties centrales 5e et 6e des deux organes d'accrochage. Le plot d'accrochage postérieur 8 présente, dans sa face postérieure, une encoche 8a tournée vers l'arrière et le plot d'accrochage antérieur 9 présente, dans sa face antérieure, un creux 9a en dessous duquel s'étend un bec 9b délimité par une face inférieure 9c inclinée de haut en bas et d'avant en arrière. L'encoche 8a et le creux 9a jouent exactement le même rôle que l'encoche 4d et le creux 4f de la barrette d'accrochage 4. Dans cette forme d'exécution la semelle 1 présente, de préférence, une nervure longitudinale 1a s'étendant entre les deux plots d'accrochage 8, 9 pour éviter que la partie avant de la pédale ne vienne s'engager derrière le plot d'accrochage antérieur 9. Cette nervure 1a a la même épaisseur que les autres sculptures de la semelle et que les plots 8, 9 pour permettre la marche normale à plat. Par ailleurs un espace de dégagement latéral 1b est prévu dans la semelle, sur toute la largeur de celle-ci, en avant du plot d'accrochage antérieur 9.

Dans la variante d'exécution de l'invention représentée sur la figure 10 la partie 7b du corps 7 de la pédale située du côté extérieur de la bicyclette présente avantageusement une face externe 7d qui est inclinée de haut en bas et de l'extérieur vers l'intérieur, pour augmenter la garde au sol de la pédale lorsque la bicyclette est inclinée. Par ailleurs les organes d'ancrage sont montés réglables longitudinalement sur le corps 7 et ils sont bloqués dans la position désirée au moyen de vis 11 vissées dans le corps 7.

Bien que dans la forme d'exécution de l'invention qui a été décrite précédemment, la pédale 2 soit constituée de deux morceaux de corde à piano 5 et 6 cambrés et solidaires d'un corps de pédale 7 en matière plastique moulée, il va de soi que, suivant une variante de réalisation, la totalité de la pédale 2, y compris les points d'ancrage postérieur 5 et antérieur 6 pourrait être réalisés en une seule pièce de matière plastique moulée.

La pédale 2 pourrait être aussi réalisée à partir d'une seule pièce métallique estampée de la manière appropriée pour constituer à la fois le corps central de la pédale et les deux organes d'ancrage postérieur 5 et antérieur 6.

**Revendications**

1. Dispositif de fixation d'une chaussure sur une pédale de bicyclette, comprenant sous la semelle de la chaussure, au moins un élément d'accrochage (4, 8, 9) fixé à cette semelle et présentant une encoche d'accrochage postérieure (4d, 8a) ouverte vers l'arrière et un creux d'accrochage antérieur (4f, 9a), ouvert vers l'avant, et, sur la pédale (2), des organes d'ancrage postérieur (5) et antérieur (6), lesquels sont adaptés à être engagés respectivement à l'intérieur de l'encoche d'accrochage postérieure et à l'intérieur du creux d'accrochage antérieur des éléments d'accrochage rapportés sous la chaussure, caractérisé en ce que :

— ces deux organes d'ancrage sont constitués par deux tronçons de fil métallique élastique cambré, et ils comportent des éléments d'ancrage postérieur (5e) et antérieur (6e) situés à une distance longitudinale (a) l'un de l'autre légèrement inférieure ou égale à la distance entre l'encoche postérieure (4d, 8a) et le creux antérieur (4f, 9a) de l'élément d'accrochage fixé à la chaussure, de manière à pouvoir venir se loger et se verrouiller respectivement dans l'encoche postérieure (4d, 8a) et le creux antérieur (4f, 9a) pour assurer la fixation de la chaussure sur la pédale (2),

— le fil métallique formant l'organe d'ancrage postérieur (5) comprend deux branches horizontales (5c, 5d) se rejoignant pour former un angle obtus ouvert vers l'avant, de substantiellement 120° à 130°.

— le fil métallique formant l'organe d'ancrage antérieur (6) comprend une branche horizontale transversale présentant deux bossages (6f, 6g) s'étendant vers l'arrière, en formant entre eux une légère encoche (6e) située dans la partie centrale de cette branche,

— laquelle encoche (6e) est adaptée à être engagée à l'intérieur de l'encoche (4f, 9a) de l'élément avant d'accrochage (4h ou 9) rapporté sous la chaussure, cependant que le sommet de l'angle obtus de l'organe d'ancrage postérieur (5) est engagé à l'intérieur de l'encoche de l'élément d'accrochage arrière (4e, 8) de l'élément rapporté sous la chaussure.

2. Dispositif selon la revendication 1, caractérisé en ce que l'organe d'ancrage postérieur (5), porté par le corps (7) de la pédale comprend deux branches coudées (5a, 5d) s'étendant verticalement à la sortie de ce corps (7), ces branches verticales (5a, 5d) étant prolongées, à leurs extrémités supérieures, par les deux branches horizontales (5c, 5d) de cet organe d'ancrage postérieur.

3. Dispositif selon la revendication 1, caractérisé en ce que l'organe d'ancrage antérieur (6) comprend deux branches latérales (6a, 6b), s'étendant sensiblement horizontalement vers l'avant à partir du corps (7) de la pédale, ces deux branches latérales (6a, 6b) convergeant l'une vers l'autre, et étant prolongées vers le haut par des branches, sensiblement verticales (6c, 6d) qui sont reliées entre elles, à leurs extrémités supérieures, par la branche horizontale et transversale, qui présente les deux bossages (6f, 6g) disposés de part et d'autre de la légère encoche centrale (6f) de cette branche.

4. Dispositif de fixation selon la revendication 3, caractérisé en ce que la branche horizontale et transversale de l'organe d'ancrage antérieur (6), porté par le corps (7) de la pédale, présente la forme générale d'un angle obtus ouvert vers l'arrière.

5. Dispositif de fixation selon la revendication 1, caractérisé en ce que les deux éléments d'accrochage, avant (4h) et arrière (4e) étant portés par une même pièce (4), rapportée sous la semelle de la chaussure, celle-ci consiste en une barrette longitudinale aux extrémités de laquelle il est prévu deux becs (4h) et (4e) formant les éléments d'accrochage et qui forment respectivement une encoche (4f) tournée vers l'avant et une encoche (4d) tournée vers l'arrière.

6. Dispositif suivant la revendication 1, caractérisé en ce que le corps central (7) de la pédale (2) comprend deux parties épaisses latérales (7a, 7b) et qui sont reliées par une traverse (6c) de plus petite largeur, cette traverse étant traversée par l'axe de pivotement de la pédale (2).

**Patentansprüche**

1. Vorrichtung zur Befestigung eines Schuhs an einem Fahrradpedal, bestehend aus, unter der Sohle des Schuhs, mindestens einem Einhakelement (4, 8, 9), das an der Sohle befestigt ist und eine hintere, nach hinten offene Einhakkerbe (4d, 8a) und eine vordere, nach vorne offene Einhakvertiefung (4f, 9a) aufweist, und an dem Pedal (2) ein hinteres Einhakorgan (5) und ein vorderes Einhakorgan (6), die in die hintere Einhakkerbe bzw. in die vordere Einhakvertiefung der unter dem Schuh angebrachten Einhakelemente eintreten können, dadurch gekennzeichnet,

— diese beiden Verankerungsorgane aus zwei Abschnitten von gebogenem, elastischem Metalldraht bestehen und ein hinteres Verankerungselement (5e) und ein vorderes Verankerungselement (6e) besitzen, die in einem Längsabstand (a) voneinander gelegen sind, der etwas kleiner oder gleich dem Abstand zwischen der hinteren Kerbe (4d, 8a) und der vorderen Vertiefung (4f, 9a) des an dem Schuh befestigten Verankerungselements ist, so daß sie in die hintere Kerbe (4d, 8a) bzw. in die vordere Vertiefung (4f, 9a) eintreten und sich dort verriegeln können, um die Befestigung des Schuhs an dem Pedal (2) zu gewährleisten,

— daß der das hintere Verankerungsorgan (5) bildende Metalldraht zwei horizontale Schenkel (5c, 5d) besitzt, die aneinander anschließen, um einen nach vorne offenen stumpfen Winkel von im wesentlichen 120° bis 130° zu bilden,

— daß der das vordere Verankerungsorgan (6) bildende Metalldraht einen horizontalen Querschenkel mit zwei sich nach hinten erstreckenden Erhebungen (6f, 6g) besitzt, die mitander eine leichte Vertiefung (6e) bilden, die im zentralen Teil des Schenkels gelegen ist,

— daß die Vertiefung (6e) in das Innere der Kerbe (4f, 9a) des unter dem Schuh angebrachten vorderen Einhakelements (4h oder 9) eintreten kann, während die Spitze des stumpfen Winkels des hinteren Verankerungsorgans (5) in das Innere der Kerbe des hinteren Einhakelements (4e, 8) des unter dem Schuh angebrachten Elements eintritt.

2. Vorrichtung nach Anspruch 1, dadurch gekennzeichnet, daß das hintere, von dem Körper (7) des Pedals getragene Verankerungsorgan (5) zwei gekröpfte Schenkel (5a, 5d) aufweist, die sich am Austritt aus dem Körper (7) vertikal erstrecken, wobei diese vertikalen Schenkel (5a, 5d) an ihren oberen Enden durch die beiden horizontalen Schenkel (5c, 5d) des hinteren Verankerungsorgans verlängert sind.

3. Vorrichtung nach Anspruch 1, dadurch gekennzeichnet, daß das vordere Verankerungsorgan (6) zwei seitliche Schenkel (6a, 6b) besitzt, die sich im wesentlichen horizontal vom Körper (7) des Pedals nach vorne erstrecken, aufeinander zu konvergieren und nach oben durch im wesentlichen vertikale Schenkel (6c, 6d) verlängert sind, die an ihren oberen Enden miteinander durch den horizontalen Querschenkel verbunden sind, der die beiden Erhebungen (6f, 6g) besitzt, die zu beiden Seiten der leichten zentralen Vertiefung (6e) dieses Schenkels angeordnet sind.

4. Befestigungsvorrichtung nach Anspruch 3, dadurch gekennzeichnet, daß der horizontale Querschenkel des vorderen Verankerungsorgans (6), das von dem Körper (7) des Pedals getragen wird, die allgemeine Form eines nach hinten offenen stumpfen Winkels besitzt.

5. Befestigungsvorrichtung nach Anspruch 1, dadurch gekennzeichnet, daß das vordere Einhakelement (4h) und das hintere Einhakelement (4e) von einem gemeinsamen Teil (4) getragen sind, das unter der Sohle des Schuhs angebracht ist und aus einer Längsleiste besteht, an deren Enden zwei Nasen (4h und 4e) vorgesehen sind, die die Einhakelemente bilden und eine nach vorne gewandte Kerbe (4f) bzw. eine nach hinten gewandte Kerbe (4d) bilden.

6. Vorrichtung nach Anspruch 1, dadurch gekennzeichnet, daß der zentrale Körper (7) des Pedals (2) zwei dicke Seitenteile (7a, 7b) besitzt, die durch einen Steg (7c) von kleinerer Breite miteinander verbunden sind, der von der Drehachse des Pedals (2) durchsetzt ist.

## Claims

1. A device for the fixing of a shoe to a bicycle pedal, comprising at least one fastening element (4, 8, 9) fixed to the underside of the sole of the shoe and presenting on its rear end a posterior coupling notch (4d, 8a) opening rearwardly, and on its front end a coupling recess (4f, 9a) opening forwardly, and front (6) and rear (5) anchoring members carried by the pedal (2) and adapted for respectively being engaged inside the rear coupling notch and inside the front coupling recess of the fastening elements fixed to the underside of the shoe, **characterized** in that :
— the two anchoring members are constituted by two arched sections of resilient metal wire, and include a rear anchoring member (5e) and a front anchoring member (6e) spaced from each other by a longitudinal distance (a) being slightly less than, or equal to the distance between the posterior coupling notch (4d, 8a) and the front coupling recess (4f, 9a) of the fastening element fixed to the shoe, so that the said anchoring members are enabled to become respectively accomodated and locked within the posterior coupling notch (4d, 8a) and within the front coupling recess (4f, 9a) for achieving the fixing of the shoe onto the pedal (2) ;
— The metal wire forming the posterior anchoring member (5) comprises two horizontal legs (5c, 5d) which join together so as to form an obtuse angle opening forwardly, of substantially 120° to 130° ;
— the metal wire forming the front anchoring member (6) comprises a transversal horizontal leg presenting two bosses (6f, 6g) which extend rearwardly while forming between them a shallow notch (6e) located in the central portion of said leg ;
— the said shallow notch (6e) is adapted for becoming engaged within the coupling recess (4f, 9a) formed in the forward fastening element (4h or 9) fixed to the underside of the shoe, while the apex of the obtuse angle of the rear anchoring member (5) is engaged inside the notch of the rear fastening element (4e, 8) of the element fixed to the underside of the shoe.

2. A device according to Claim 1, characterized in that the rear anchoring member (5) carried by the body (7) of the pedal comprises two bent legs (5a, 5d) which extend vertically in their portion emerging from said body (7), these vertical leg portions merging at their upper ends with the two horizontal legs (5c, 5d) of this rear anchoring member.

3. A device according to Claim 1, characterized in that the front anchoring member (6) comprises two lateral legs (6a, 6b) which extend forwardly and substantially horizontally out of the body (7) of the pedal, these two lateral legs (6a, 6b) converging towards each other and merging respectively with ypwardly extending legs (6c, 6d) which are substantially vertical and are connected together at their upper ends by the horizontal and transversal leg which presents the two bosses (6f, 6g) disposed on either side of the shallow central notch (6e) of said horizontal leg.

4. A fixing device according to Claim 3, characterized in that the horizontal and transversal leg of the forward anchoring member (6) carried by the body (7) of the pedal has the general shape of an obtuse angle opening rearwardly.

5. A fixing device according to Claim 1, characterized in that, the two coupling elements, namely the front element (4h) and the rear element (4e) being carried by a same part (4) fixed to the underside of the sole of the shoe, said part consists of a longitudinal strip on the ends of which are provided two lips (4h) and (4e) forming the coupling elements which are defining respectively a recess (4f) oriented forwardly and a notch (4d) oriented rearwardly.

6. A device according to Claim 1, characterized in that the central body (7) of the pedal (2) comprises two thick lateral portions (7a, 7b) which are linked together by a strut (7c) having a shorter width, with the pivotal axis of the pedal (2) running through said strut.

Fig:1

Fig:2

Fig:3

Fig:4

Fig. 6

Fig. 7

Fig. 10

Fig: 5

Fig: 8

Fig: 9